# EUROPEAN PATENT SPECIFICATION

(11) **EP 2 106 019 B1**
(45) Date of publication and mention of the grant of the patent: **09.02.2011**
(21) Application number: 09004119.5
(22) Date of filing: 23.03.2009
(51) Int. Cl.: H02P 6/18, H02P 25/02

(54) **Method for controlling operation of a linear vibration motor**
Verfahren zur Steuerung des Betriebs eines linearen Vibrations-Motors
Procédé de contrôle de fonctionnement d'un moteur à vibration linéaire

(30) Priority: 26.03.2008 JP 2008081955
(43) Date of publication of application: 30.09.2009
(73) Proprietor: Panasonic Electric Works Co., Ltd., Kadoma-shi Osaka (JP)
(72) Inventor: Kashiwabara, Minoru, Osaka (JP); Ibuki, Yasuo, Osaka (JP)
(74) Representative: Samson & Partner

(56) References cited:
- EP-A- 0 476 751
- EP-A- 1 063 760
- DE-A1-102004 030 326
- JP-A- 56 001 790
- US-B1- 6 289 680

## Description

### Field of the Invention

The present invention relates to a method for controlling the operation of a linear vibration motor preferably applicable to a reciprocating electric shaver and designed to cause a movable body to make reciprocating movement.

### Background of the Invention

Conventionally, there is known a linear vibration motor that includes a stator formed of an electromagnet or a permanent magnet, a vibrator provided with a permanent magnet or an electromagnet and a control unit for controlling the driving current supplied to the winding of the electromagnet, the vibrator being reciprocatingly vibrated relative to the stator. In the linear vibration motor, there is a need to detect the amplitude displacement, velocity and acceleration of the vibrator in order to keep the amplitude constant. In this viewpoint, the conventional linear vibration motor has a non-energization period during which to detect the amplitude displacement, velocity and acceleration of the vibrator (see, e.g., Japanese Patent Laid-open Publication No. 2001-16892).

The non-energization period needs to be shortened in case an attempt is made to efficiently feed an electric current to the winding of the electromagnet. In contrast, if an attempt is made to sufficiently lengthen the non-energization period, the timing at which an electric current is fed to the winding of the electromagnet becomes too late to efficiently supply the electric current. In order to detect the amplitude displacement, velocity and acceleration of the vibrator within a short period of time, it is necessary to perform operation control with a microcomputer that makes use of highly accurate external oscillation. This makes it difficult to save cost and to reduce the size of a circuit.

JP 56001790 discloses a linear-motor control circuit. The terminal voltage across a linear motor coil is applied to a differential amplifier, thereby a counter electromotive force is detected. The output of the differential amplifier is supplied to a control circuit together with a reference speed Vref, and the control output CONi is intermittently supplied to a holding circuit by a sampling signal SMP, and the output of the holding circuit is given to a linear motor coil by a signal N/FD which is formed by inverting the sampling signal. During the sampling period, the driving current is not flowed through the coil. Therefore, only a speed component is included in the terminal voltage of the coil, and the accuracy in speed sensing can be enhanced.

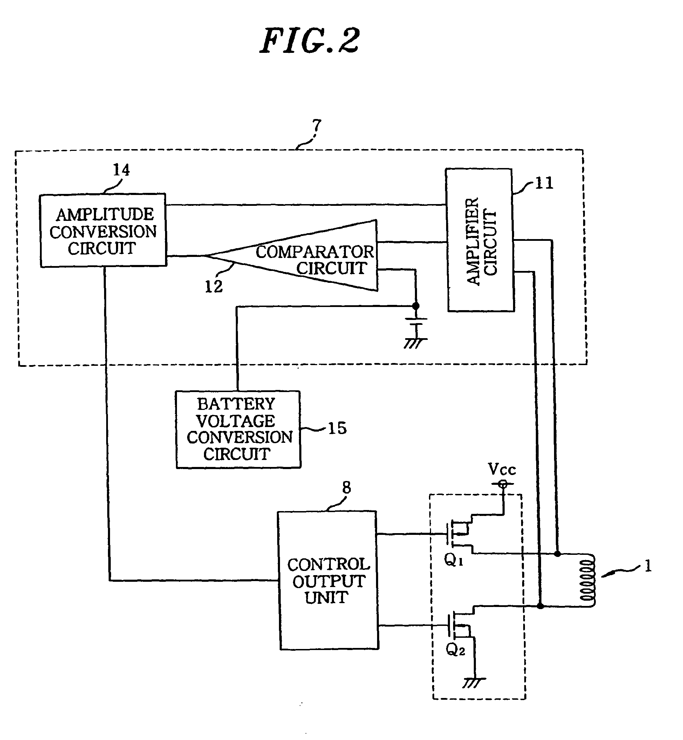

EP 1 063 760 A2 discloses a control system for a linear vibration motor. The ON-period and the OFF-periods are determined in a manner as shown in Fig. 2 which includes a displacement curve D of the vibrator, the drive current Id, the voltage V developed across the winding, a displacement signal X for detection of the maximum displacement, and a speed signal S for detection of the speed of the vibrator.

### Summary of the Invention

While the invention is defined in the independent claim 1, further aspects of the invention are set forth in the dependent claims, the drawings and the following description.

In view of the above, the present invention provides a linear vibration motor operation control method capable of performing the operation control by which an electric current can be fed to a winding in a cost-effective and efficient manner.

In accordance with claim 1, there is provided a method for controlling operation of a linear vibration motor including a stator formed of an electromagnet with a winding or a permanent magnet, a vibrator provided with a permanent magnet or an electromagnet with a winding and a control unit for controlling a driving current supplied to the winding of the electromagnet, the linear vibration motor being configured to reciprocate the vibrator relative to the stator, the method including: providing a non-energization period during which no driving current flows through the winding of the electromagnet, the non-energization period being equal to greater than a 1/4 cycle; detecting an electromotive voltage induced in the winding as the vibrator makes vibrating movement within the non-energization period; detecting the displacement, velocity or acceleration of the vibrator based on the electromotive voltage thus detected; and optimally controlling the driving current supplied to the winding based on the displacement, velocity or acceleration of the vibrator thus detected and the current supplying timing, wherein the driving current is a pulsed DC current.

With the linear vibration motor operation control method of the present invention, it is possible to perform the operation control by which an electric current can be fed to a winding in a cost-effective and efficient manner.

### Brief Description of the Drawings

The objects and features of the present invention will become apparent from the following description of preferred embodiments, given in conjunction with the accompanying drawings, in which:
Fig. 1 is a block diagram showing a linear vibration motor in accordance with one embodiment of the present invention;
Fig. 2 is a circuit diagram showing an amplitude detection unit and a power supply circuit of the linear vibration motor shown in Fig. 1, wherein a reference voltage is adjusted depending on a battery voltage;

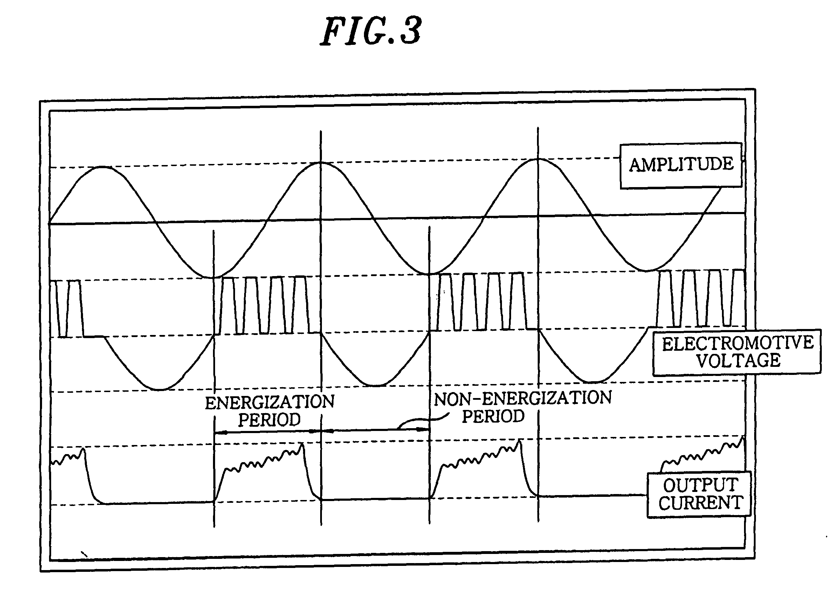

Fig. 3 is a waveform chart for explaining the timing for measurement of the electromotive voltage of a winding;
Fig. 4 is a circuit diagram showing a modified example of the power supply circuit shown in Fig. 2;
Fig. 5 is a waveform chart for explaining the timing for measurement of the electromotive voltage of a winding in the conventional linear vibration motor; and
Fig. 6 is a circuit diagram showing an amplitude detection unit and a power supply circuit of the linear vibration motor shown in Fig. 1, wherein a reference voltage is adjusted by a control output unit depending on a battery voltage.

### Detailed Description of the Preferred Embodiments

Hereinafter, a linear vibration motor and a method for controlling the operation thereof in accordance with an embodiment of the present invention will be described with reference to the accompanying drawings which form a part hereof.

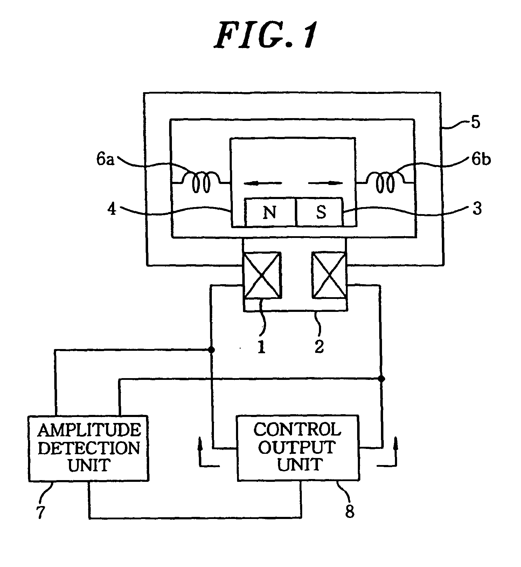

Referring to Fig. 1, a linear vibration motor in accordance with the embodiment of the present invention includes a stator 2 with a winding 1, a vibrator 4 with a permanent magnet 3, a frame 5 for holding the vibrator 4, springs 6a and 6b retained between the vibrator 4 and the frame 5, an amplitude detection unit 7 for detecting the vibration amplitude of the vibrator 4 based on the electromotive voltage induced in the winding 1 and a control output unit 8 for PWM (pulse width modulation)-controlling the driving current fed to the winding 1 based on the detection results of the amplitude detection unit 7. As shown in Fig. 2, the amplitude detection unit 7 includes an amplifier circuit 11 for amplifying the voltage between the opposite ends of the winding 1 and a comparator circuit 12 for comparing the amplified voltage with a reference voltage V0, i.e., a zero voltage. The time T0 when the amplified voltage becomes equal to the reference voltage V0 is regarded as a turning point of the vibration amplitude. The control output unit 8 sets a non-energization period in which the driving current does not flow through the winding 1 for a 1/4 cycle or more from the turning point. The amplitude detection unit 7 further includes an amplitude conversion circuit 14 for periodically sampling the electromotive voltage of the winding 1 during this non-energization period and calculating the vibration amplitude using the maximum value of the sampled electromotive voltages.

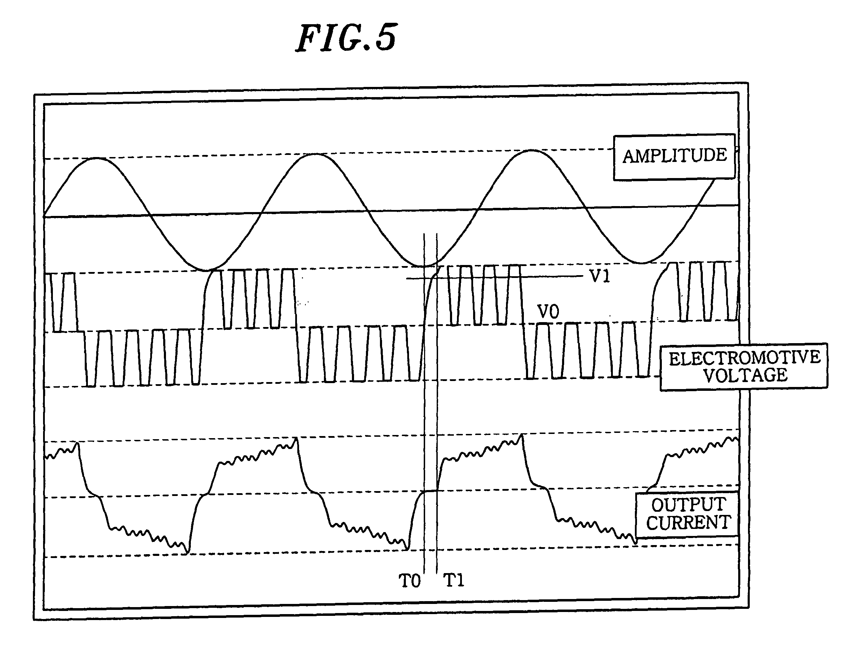

In the conventional linear vibration motor, as illustrated in Fig. 5, the vibration amplitude is detected based on the time difference between the time T0 at the turning point and the time T1 when the electromotive voltage becomes equal to a specified constant voltage V1. Since the time period for detection is too short, however, the conventional detection method is susceptible to measurement errors and is easily affected by noises, which reduces the detection accuracy. With the linear vibration motor in accordance with the present embodiment, the electromotive voltage of the winding 1 is periodically sampled by the amplitude conversion circuit 14 during the non-energization period and the vibration amplitude is calculated using the maximum value of the sampled electromotive voltages. Therefore, it is possible to reliably detect the vibration amplitude even if the sampling timing is deviated to some extent. Furthermore, an ample time is left before the winding 1 is energized again. With the linear vibration motor of the present embodiment, therefore, it is possible to energize the winding 1 in a timely manner, thereby efficiently operating the motor and saving the electric energy.

For efficient energization, it is preferred that the winding 1 is energized within a 1/20 cycle from the maximum displacement point or within a 1/4 cycle from the maximum velocity point. It is also possible to energize the winding 1 at more accurate timing if the maximum amplitude point or the maximum velocity point is detected by a microcomputer. In case the microcomputer is used for control purposes, it is possible to accurately detect the vibration amplitude even if the sampling timing is deviated to some extent. Thanks to this feature, the linear vibration motor can be controlled more accurately than in the conventional case, even when use is made of an oscillation circuit with reduced accuracy or an oscillation clock built in the microcomputer.

Use of the microcomputer and prolongation of the non-energization period make it possible to set the period for detection of the maximum displacement point longer than in the conventional case. For example, the period for detection of the maximum displacement point may be set equal to 300 microseconds, which is longer than the conventional detection period by 100 microseconds or more. This makes it possible to control the linear vibration motor without missing the maximum displacement point even when the maximum displacement point is delayed by steep load variations.

It is typical that the driving current supplied to the winding 1 is PWM (pulse width modulation)-controlled through the use of upper and lower switching devices Q1 and Q2 (see Fig. 2) of an inverter circuit for energizing the winding 1.

It is equally possible to WPWM (weighted pulse width modulation)-control the upper switching device Q1 in case of the control in which the non-energization period is one-half cycle. With this control, it is possible to have the switching timing for the motor remain the same and to supply an electric current at the efficient timing even when the current amount is adjusted according to the load variations.

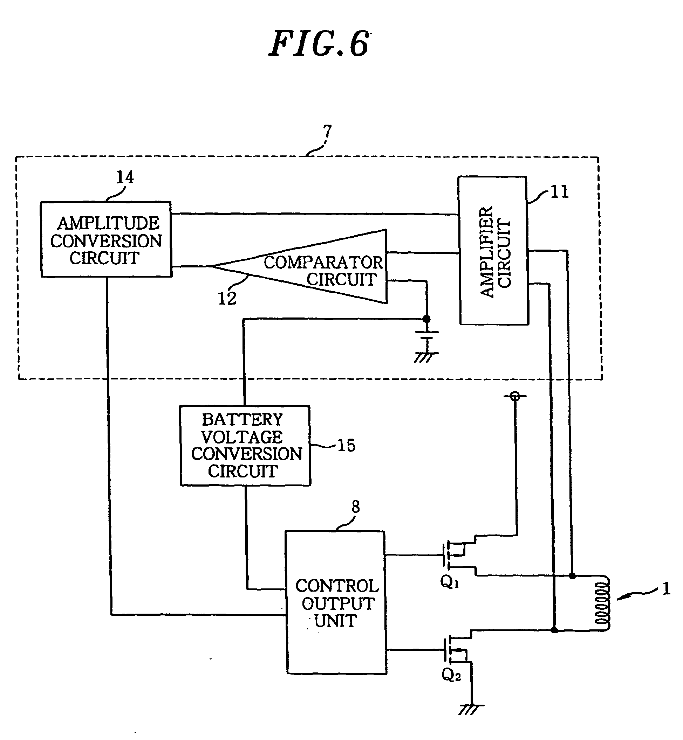

The voltage of a battery Vcc is detected on a real time basis by a battery voltage conversion circuit 15 shown in Fig. 6. Depending on the voltage thus detected, the control output unit 8 performs amplitude adjustment control. If the switching devices Q1 and Q2 are controlled in a uniform pattern regardless of the voltage, the electric current and the vibration amplitude would be increased when the battery voltage is high. With the afore-mentioned configuration by which to perform voltage feedback control, however, it is possible to control the vibration amplitude constant regardless of the voltage difference caused by the change in battery capacity.

Alternatively, as shown in Fig. 2, the amplitude variation resulting from the voltage of the battery Vcc may be suppressed by adjusting the reference voltage of the comparator circuit 12 with the battery voltage conversion circuit 15. If the control output unit 8 performs control in a uniform pattern regardless of the voltage, the electric current and the vibration amplitude would be increased when the battery voltage is high. In contrast, the electric current and the vibration amplitude would be decreased when the battery voltage is low. If the reference voltage is adjusted as above, however, the velocity of the vibrator detected is high when the battery voltage remains high. This makes it possible to perform velocity reduction control. On the other hand, the velocity of the vibrator detected is low when the battery voltage remains low. This makes it possible to perform velocity increasing control. Thanks to this feature, if the reference voltage is suitably adjusted, it becomes possible to cancel the influence of the battery voltage on the vibration amplitude and to control the vibration amplitude constant regardless of the difference in battery voltage.

In case the linear vibration motor is kept in a high-load state for a specified period of time, the maximum value of the electromotive voltage detected during the non-energization period becomes equal to or smaller than a predetermined reference voltage. This state is determined to be abnormal, in which case the operation of the linear vibration motor may be stopped. Alternatively, the abnormality may be determined by detecting whether an electric current greater than a specified reference value continues to flow through the winding 1.

If the linear vibration motor is suddenly stopped when the battery voltage is decreased to a value lower than the reference voltage, there is a possibility that the motor may be stopped with the hair strands of a mustache or a beard caught in, e.g., a shaving mechanism. To avoid such danger, it is preferable to slowly stop the motor by gradually reducing the duty ratio of the upper switching device Q1.

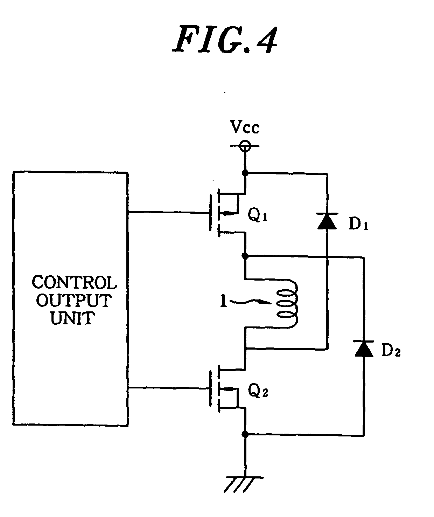

In case an electric current is supplied to the linear vibration motor in one direction, a half-bridge circuit provided with upper and lower switching devices Q1 and Q2 can be used as the inverter circuit for energizing the winding 1 as shown in Fig. 2. This makes it possible to reduce the number of switching devices, thereby saving cost and reducing size. Fig. 4 shows a half-bridge circuit. A diode D2 is arranged between the ground terminal of the half-bridge circuit and the plus terminal of the winding, while a diode D2 is arranged between the minus terminal of the winding 1 and the power source Vcc. By doing so, it is possible to allow an electric current to flow through the winding 1 again, thus operating the linear vibration motor in an efficient manner.

At this time, if the lower switching device Q2 is turned on for a time longer than one half cycle, it is possible to effectively use the electric current flowing through the winding 1 and to reduce the electric current flowing through the diode D1. This makes it possible to use low-priced component parts whose rating is low.

While the invention has been shown and described with respect to the preferred embodiments, it will be understood by those skilled in the art that various changes and modification may be made without departing from the scope of the invention as defined in the appended claims. For example, the present invention may also be applied to an actuator including a movable stator that is not completely fixed.

## Claims

1. A method for controlling operation of a linear vibration motor including a stator (2) formed of an electromagnet with a winding (1) or a permanent magnet (3), a vibrator (4) provided with a permanent magnet (3) or an electromagnet with a winding (1) and a control unit for controlling a driving current supplied to the winding (1) of the electromagnet, the linear vibration motor being configured to reciprocate the vibrator (4) relative to the stator (2), **characterized in that** the method comprises:
providing a non-energization period during which no driving current flows through the winding (1) of the electromagnet, the non-energization period being equal to greater than a 1/4 cycle;
detecting an electromotive voltage induced in the winding (1) as the vibrator (4) makes vibrating movement within the non-energization period;
detecting the displacement, velocity or acceleration of the vibrator (4) based on the electromotive voltage thus detected; and
controlling the driving current supplied to the winding (1) based on the displacement, velocity or acceleration of the vibrator (4) thus detected,
wherein the driving current is a pulsed DC current.

2. The method of claim 1, wherein the maximum displacement point of the vibrator (4) is taken as a reference point of the cycle, the driving current being supplied to the winding (1) within a 1/20 cycle from the reference point.

3. The method of claim 1, wherein the maximum velocity point of the vibrator (4) is taken as a reference point of the cycle, the driving current being supplied to the winding (1) within a 1/4 cycle from the reference point.

4. The method of claim 2, wherein the maximum displacement point of the vibrator (4) is detected for a time period equal to or greater than 300 microseconds.

5. The method of claim 1, wherein the start timing and the end timing of an on-time period of a switching device that forms an inverter circuit for controlling the driving current supplied to the winding (1) are kept constant, the switching operation of the switching device being controlled within the on-time.

6. The method of claim 1, wherein the voltage of a power source for supplying the driving current to the winding (1) is detected within the non-energization period, the amplitude variation of the vibrator (4) resulting from the change in the voltage of the power source being adjusted based on the detection result of the power source voltage.

7. The method of claim 1, wherein the reference voltage of a comparator circuit (12) of an amplitude detection unit (7) is adjusted using the non-energization period voltage of a power source for supplying the driving current to the winding (1), the amplitude variation of the vibrator (4) being adjusted based on the adjusted reference voltage.

8. The method of claim 1, wherein the linear vibration motor is stopped if the maximum value of an electromotive voltage detected within the non-energization period continues to be equal to or smaller than a predetermined value for a specified time or more.

9. The method of claim 1, wherein the linear vibration motor is stopped if a driving current equal to or greater than a predetermined value continues to flow through the winding (1) for a specified time or more.

10. The method of claim 1, wherein, if the voltage of a power source for supplying the driving current to the winding (1) is equal to or smaller than a predetermined value, the linear vibration motor is slowly stopped by gradually reducing the duty ratio of a switching device that forms an inverter circuit for controlling the driving current supplied to the winding (1).

11. The method of claim 1, wherein a half-bridge circuit including a pair of upper and lower switching devices (Q1, Q2) is used as an inverter circuit for controlling the driving current supplied to the winding (1).

12. The method of claim 11, wherein a first diode (D1) is arranged between a ground level of the half-bridge circuit and a plus terminal of the winding (1), and a second diode (D2) is arranged between a power source and a minus terminal of the winding (1).

13. The method of claim 11 or 12, wherein the lower switching device (Q2) is energized for a time period greater than one half cycle.

## Patentansprüche

1. Verfahren zum Steuern eines Betriebs eines linearen Vibrationsmotors, umfassend einen Stator (2), der aus einem Elektromagneten mit einer Windung (1) oder einem Permanentmagneten (3) gebildet ist, einen Vibrator (4), der mit einem Permanentmagneten (3) oder einem Elektromagneten mit einer Windung (1) versehen ist, und eine Steuereinheit zum Steuern eines der Windung (1) des Elektromagneten zugeführten Antriebsstroms, wobei der lineare Vibrationsmotor ausgelegt ist, um den Vibrator (4) relativ zum Stator (2) hin- und herzubewegen, **dadurch gekennzeichnet, dass** das Verfahren umfasst:
Bereitstellen einer Nicht-Energetisierungszeitdauer, während der kein Antriebsstrom durch die Windung (1) des Elektromagneten fließt, wobei die Nicht-Energetisierungszeitdauer größer oder gleich als ein Viertel-Zyklus ist;
Detektieren einer in der Windung (1) induzierten elektromotorischen Spannung, wenn der Vibrator (4) eine Vibrationsbewegung innerhalb der Nicht-Energetisierungszeitdauer macht;
Detektieren der Auslenkung, Geschwindigkeit oder Beschleunigung des Vibrators (4) auf der Grundlage der so detektieren elektromotorischen Spannung; und
Steuern des der Windung (1) zugeführten Antriebsstroms auf der Grundlage der so detektierten Auslenkung, Geschwindigkeit oder Beschleunigung des Vibrators (4),
wobei der Antriebsstrom ein gepulster Gleichstrom ist.

2. Verfahren gemäß Anspruch 1, wobei der maximale Auslenkungspunkt des Vibrators (4) als ein Referenzpunkt des Zyklus genommen wird, wobei der Antriebsstrom der Windung (1) innerhalb eines 1/20-Zyklus vom Referenzpunkt zugeführt wird.

3. Verfahren gemäß Anspruch 1, wobei der maximale Geschwindigkeitspunkt des Vibrators (4) als ein Referenzpunkt des Zyklus genommen wird, wobei der Antriebsstrom der Windung (1) innerhalb eines Viertel-Zyklus vom Referenzpunkt zugeführt wird.

4. Verfahren gemäß Anspruch 2, wobei die maximale Auslenkung des Vibrators (4) für eine Zeitdauer größer oder gleich 300 Mikrosekunden detektiert wird.

5. Verfahren gemäß Anspruch 1, wobei die Startzeit und die Endzeit einer Ein-Zeitdauer einer Schaltvorrichtung, die eine Inverterschaltung zum Steuern des der Windung (1) zugeführten Antriebsstroms bildet, konstant gehalten werden, wobei die Schaltoperation der Schaltvorrichtung innerhalb der Ein-Zeit gesteuert wird.

6. Verfahren gemäß Anspruch 1, wobei die Spannung einer Stromquelle zum Zuführen des Antriebsstroms der Windung (1) innerhalb der Nicht-Energetisierungszeitdauer detektiert wird, wobei die Amplitudenvariation des Vibrators (4) daher rührt, dass die Spannungsänderung der Stromquelle auf der Grundlage des Detektierungsergebnisses der Stromquellenspannung angepasst wird.

7. Verfahren gemäß Anspruch 1, wobei die Referenzspannung einer Komparatorschaltung (12) einer Amplitudendetektierungseinheit (7) unter Verwendung der Nicht-Energetisierungszeitdauerspannung einer Stromquelle zum Zuführen des Antriebsstroms der Windung (1) angepasst wird, wobei die Amplitudenvariation des Vibrators (4) auf der Grundlage der angepassten Referenzspannung angepasst wird.

8. Verfahren gemäß Anspruch 1, wobei der lineare Vibrationsmotor angehalten wird, falls der maximale Wert einer elektromotorischen Spannung, der innerhalb der Nicht-Energetisierungszeitdauer detektiert wird, weiterhin kleiner oder gleich als ein vorgegebener Wert für eine festgelegte Zeit oder mehr ist.

9. Verfahren gemäß Anspruch 1, wobei der lineare Vibrationsmotor angehalten wird, falls ein Antriebsstrom größer oder gleich ein vorgegebener Wert weiterhin durch die Windung (1) für eine festgelegte Zeitdauer oder mehr fließt.

10. Verfahren gemäß Anspruch 1, falls die Spannung einer Stromquelle zum Zuführen des Antriebsstroms der Windung (1) kleiner oder gleich als ein vorgegebener Wert ist, der lineare Vibrationsmotor langsam angehalten wird durch allmähliches Reduzieren des Tastverhältnisses einer Schaltvorrichtung, die eine Inverterschaltung zum Steuern des der Windung (1) zugeführten Antriebsstroms bildet.

11. Verfahren gemäß Anspruch 1, wobei eine Halbbrückenschaltung, die ein Paar aus einer oberen und einer unteren Schaltvorrichtung (Q1, Q2) umfasst, als eine Inverterschaltung zum Steuern des der Windung (1) zugeführten Antriebsstroms verwendet wird.

12. Verfahren gemäß Anspruch 11, wobei eine erste Diode (D1) zwischen einem Masseniveau der Halbbrückenschaltung und einem Plus-Anschluss der Windung (1) angeordnet ist, und eine zweite Diode (D2) zwischen einer Stromquelle und einem Minus-Anschluss der Windung (1) angeordnet ist.

13. Verfahren gemäß Anspruch 11 oder 12, wobei die untere Schaltvorrichtung (Q2) für eine Zeitdauer größer als ein halber Zyklus unter Strom gesetzt wird.

## Revendications

1. Procédé de contrôle de fonctionnement d'un moteur à vibration linéaire comprenant un stator (2) formé d'un électroaimant avec un enroulement (1) ou un aimant permanent (3), un vibreur (4) comprenant un aimant permanent (3) ou un électroaimant avec un enroulement (1) et un dispositif de régulation pour contrôler un courant d'excitation fourni à l'enroulement (1) de l'électroaimant, le moteur à vibration linéaire étant configuré de façon à amener le vibreur (4) à effectuer un mouvement de va-et-vient par rapport au stator (2), **caractérisé en ce que** le procédé comprend :
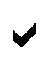 la fourniture d'une période de non excitation
durant laquelle aucun courant d'excitation ne circule au travers de l'enroulement (1) de l'électroaimant, la période de non excitation étant égale ou supérieure à 1/4 de cycle ;
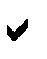 la détection d'une tension électromotrice
induite dans l'enroulement (1) lorsque le vibreur (4) exécute le mouvement de vibration à l'intérieur de la période de non excitation ;
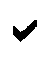 la détection du déplacement, de la vélocité ou
de l'accélération du vibreur (4) sur la base de la tension électromotrice ainsi détectée ; et 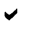 le contrôle du courant d'excitation fourni à
l'enroulement (1) sur la base du déplacement, de la vélocité ou de l'accélération du vibreur (4) ainsi détectés,
dans lequel le courant d'excitation est un courant CC à impulsion.

2. Procédé selon la revendication 1, dans lequel le point de déplacement maximum du vibreur (4) est pris comme point de référence du cycle, le courant d'excitation étant fourni à l'enroulement (1) à l'intérieur d'1/20e de cycle à partir du point de référence.

3. Procédé selon la revendication 1, dans lequel le point de vélocité maximum du vibreur (4) est pris comme point de référence du cycle, le courant d'excitation étant fourni à l'enroulement (1) à l'intérieur d'1/4 de cycle à partir du point de référence.

4. Procédé selon la revendication 2, dans lequel le point de déplacement maximum du vibreur (4) est détecté pendant une période de temps égale ou supérieure à 300 microsecondes.

5. Procédé selon la revendication 1, dans lequel le moment de début et le moment de fin d'une période de temps d'activation d'un dispositif de commutation qui forme un circuit inverseur pour contrôler le courant d'excitation fourni à l'enroulement (1) sont maintenus constants, l'opération de commutation du dispositif de commutation étant contrôlée à l'intérieur de la période de temps d'activation.

6. Procédé selon la revendication 1, dans lequel la tension d'une source d'alimentation pour fournir le courant d'excitation à l'enroulement (1) est détectée à l'intérieur de la période de non excitation, la variation en amplitude du vibreur (4) résultant du changement de la tension de la source d'alimentation étant ajustée sur la base du résultat de la détection de la tension de la source d'alimentation.

7. Procédé selon la revendication 1, dans lequel la tension de référence d'un circuit comparateur (12) d'un module de détection d'amplitude (7) est ajustée en utilisant la tension de la période de non excitation d'une source d'alimentation pour fournir le courant d'excitation à l'enroulement (1), la variation en amplitude du vibreur (4) étant ajustée sur la base de la tension de référence ajustée.

8. Procédé selon la revendication 1, dans lequel le moteur à vibration linéaire est arrêté si la valeur maximum d'une tension électromotrice détectée à l'intérieur de la période de non excitation continue d'être égale ou inférieure à une valeur prédéterminée pendant une période de temps spécifiée ou plus.

9. Procédé selon la revendication 1, dans lequel le moteur à vibration linéaire est arrêté si un courant d'excitation égal ou supérieur à une valeur prédéterminée continue de circuler au travers de l'enroulement (1) pendant une période de temps spécifiée ou plus.

10. Procédé selon la revendication 1, dans lequel, si la tension d'une source d'alimentation pour fournir le courant d'excitation à l'enroulement (1) est égale ou inférieure à une valeur prédéterminée, le moteur à vibration linéaire est arrêté lentement en réduisant progressivement le facteur de service d'un dispositif de commutation qui forme un circuit inverseur pour contrôler le courant d'excitation fourni à l'enroulement (1).

11. Procédé selon la revendication 1, dans lequel un circuit en demi-pont comprenant une paire de dispositifs de commutation supérieur et inférieur (Q1, Q2) est utilisé en tant que circuit inverseur pour contrôler le courant d'excitation fourni à l'enroulement (1).

12. Procédé selon la revendication 11, dans lequel une première diode (D1) est placée entre un niveau de mise à la masse du circuit en demi-pont et une borne positive de l'enroulement (1), et une seconde diode (D2) est placée entre une source d'alimentation et une borne négative de l'enroulement (1).

13. Procédé selon la revendication 11 ou 12, dans lequel le dispositif de commutation inférieur (Q2) est excité pendant une période de temps supérieure à 1/2 cycle.
